# FASCICULE DE BREVET EUROPEEN

(11) **EP 3 365 131 B1**
(45) Date de publication et mention de la délivrance du brevet: **08.09.2021**
(21) Numéro de dépôt: 16809920.8
(22) Date de dépôt: 21.10.2016
(51) Int. Cl.: B22F 5/10, B22F 10/20

(54) **PROCEDE DE FABRICATION PAR FUSION ET COMPRESSION ISOSTATIQUE A CHAUD**
VERFAHREN ZUR HERSTELLUNG MIT VERWENDUNG VON SCHMELZEN UND HEISSISOSTATISCHEM PRESSEN
METHOD OF PRODUCTION USING MELTING AND HOT ISOSTATIC PRESSING

(30) Priorité: 23.10.2015 FR 1560121
(43) Date de publication de la demande: 29.08.2018
(73) Titulaire: AddUp, 63118 Cébazat (FR)
(72) Inventeur: VANNEROT, Philippe, F - 52200 Saints-geosmes (FR)
(74) Mandataire: Barascou, Frédéric
(86) Numéro de dépôt international: PCT/FR2016/052735
(87) Numéro de publication internationale: WO 2017/068300

(56) Documents cités:
- EP-A2- 1 683 593
- EP-A2- 1 800 700
- WO-A1-2014/179679
- CN-A- 103 752 823
- CN-B- 104 550 950

## Description

La présente invention concerne le domaine de la métallurgie des poudres dans lequel des pièces métalliques sont obtenues par frittage de poudres métalliques.

Plus particulièrement, le présent procédé combine, de manière particulièrement innovante, la métallurgie des poudres avec les procédés de fabrication additive, c'est à dire des procédés de mise en forme d'une pièce par ajout de matière, notamment par empilement de couches successives.

La présente invention trouvera son application principalement dans le domaine des procédés de fabrication d'une pièce dont le processus de mise en forme de ladite pièce est un processus physique, en particulier un processus de fusion suivi d'une solidification de poudres métalliques.

Dans les procédés classiques de métallurgie des poudres, on encapsule généralement des poudres dans une enceinte métallique solide qui a été conçue préalablement spécifiquement pour la pièce que l'on souhaite fabriquer, avant de procéder à une étape de compression isostatique à chaud (CIC).

Cependant, l'étape de CIC va engendrer, grâce à une soudure par diffusion, un compactage des poudres, dont la quasi-totalité sont fusionnées, difficilement maîtrisable et qu'il est nécessaire de prendre en compte préalablement à la fabrication de la pièce en question.

En ce qui concerne à présent les procédés de mise en forme d'une pièce par fabrication additive, traditionnellement et comme divulgué dans les documents CN 104 550 950 B, CN 103 752 823 A, EP 1 800 700 A2, EP 1 683 593 A2 et WO 2014/179679 A1, ceux-ci consistent en la réalisation, à partir de données numériques, d'une pièce en trois dimensions (3D) par application, sur un support, de fines couches successives en deux dimensions (2D) au moyen d'un rouleau de dépôt de poudres.

La mise en forme est associée, par exemple, à un faisceau d'électrons qui balaye successivement chaque couche et entraîne une fusion locale des poudres.

La solidification a lieu directement après la source d'énergie.

Le produit fini est obtenu suivant certaines opérations de finition, comportant notamment un nettoyage de la pièce, un enlèvement des supports, un sablage et un usinage.

Les procédés mis en œuvre actuellement dans la fabrication additive présentent toutefois certains inconvénients.

En particulier, pour la fabrication de pièces présentant une taille importante, présentant une taille supérieure ou égale à 2-3 mm, il est nécessaire de construire des supports adaptés venant étayer la pièce en construction et permettant une évacuation de la chaleur dégagée.

En effet, comme indiqué précédemment, la fabrication additive nécessite, pour la fusion puis la solidification des poudres, l'application d'une source d'énergie, généralement un faisceau d'électrons ou un rayon laser. Le faisceau d'électrons, par exemple, consiste en une source de chaleur tridimensionnelle étroite et intense dont la température peut atteindre, voire dépasser, 1600°C et peut aller jusqu'à 3000°C. Par conséquent, sans la présence des supports pour étayer et évacuer la chaleur, les pièces fabriquées présenteraient de graves déformations par rapport à la forme à atteindre.

Or, l'utilisation des supports, utile d'un côté pour éviter la présence de déformations sur le produit fini, présente, d'un autre côté, des inconvénients.

Plus particulièrement, au moment de l'enlèvement des supports, une fois la solidification terminée, il est nécessaire de les détacher de la pièce. Cette opération a pour conséquence de créer des défauts de surface, à l'endroit où ladite pièce était en contact avec le support. Une étape de ponçage est alors nécessaire afin de remédier à la présence de ces défauts de surface.

Par exemple, le document de brevet WO 2013/092997 décrit un procédé de fabrication d'un objet tridimensionnel par consolidation successive, couche par couche, dans lequel :
- on dépose une couche de poudre sur un support ;
- on effectue une fusion de la périphérie de la couche de poudre par un faisceau laser ;
- on effectue une fusion de la partie centrale intérieure pleine de la couche de poudre par application d'un faisceau d'électrons.

La mise en œuvre de ces étapes permettrait d'obtenir des pièces à faible rugosité de surface à l'extérieur.

Cependant, le procédé décrit ici présente certains inconvénients et notamment celui de nécessiter l'emploi de deux sources d'énergie, selon que l'on souhaite fusionner le cœur de la pièce ou la peau de celle-ci.

En ce qui concerne la présente invention, celle-ci propose, dans une démarche inventive, une combinaison particulièrement intéressante et originale des techniques de métallurgie des poudre et de fabrication additive pour aboutir à un procédé mettant en œuvre une succession d'étapes permettant d'aboutir, au final, à des pièces ou des objets tridimensionnels pouvant être de grandes dimensions tout en présentant une structure interne dense et homogène, lesdits objets pouvant présenter et ayant en outre des formes très complexes, sans nécessiter l'utilisation, parfois contraignante, de supports pour supporter la structure au cours de la fabrication.

Il est à noter également que les pièces obtenues par la mise en œuvre du procédé de l'invention présentent des caractéristiques exceptionnelles, notamment en termes mécaniques et d'isotropie.

A cet effet, la présente invention concerne un procédé de fabrication d'un objet tridimensionnel à partir d'un empilement de couches de poudre comme décrit dans revendication 1 associée.

La présence d'un maillage interne tridimensionnel pénétrant en partie la peau extérieure permet une évacuation efficace, vers l'extérieur de la couche, de la chaleur produite par la source d'énergie utilisée pour permettre la fusion-solidification des poudres.

De manière avantageuse, la source d'énergie que l'on utilise au cours des étapes c) et d) de fusion-solidification consiste en un faisceau d'électrons, tout comme pour l'étape b) de balayage.

Selon une autre particularité de l'invention, on réalise préférentiellement l'ensemble des étapes dans une atmosphère sous vide.

De manière intéressante, les mailles du maillage interne tridimensionnel de l'objet tridimensionnel dessinent une pluralité de dodécaèdres, ou toutes autres formes géométriques réalisant un maillage uniforme ou à gradient de taille.

Préférentiellement, la largeur en section des mailles du maillage tridimensionnel de l'objet tridimensionnel est comprise entre 0,50 et 3,50 mm.

Dans un exemple avantageux du procédé de fabrication additive selon l'invention, on fait pénétrer le maillage interne dans la bordure externe d'environ 0,1 à 0,9 mm.

L'invention présente de nombreux avantages et permet de remédier aux inconvénients des procédés de l'état de la technique de manière originale.

D'une part, le procédé de l'invention donne une solution permettant d'éviter la mise en place de supports lors de la fabrication de pièces tridimensionnelles de grandes tailles, lesdits supports étant généralement à l'origine de la formation de défauts de surface auxquels il faut remédier.

D'autre part, le maillage tridimensionnel mis en place lors du présent procédé, et pénétrant pour partie dans la bordure extérieure, ou peau, favorise une élimination de la chaleur qui est nécessairement produite lors de la fusion des poudres au moyen de la source d'énergie.

Il est également à noter que le procédé de l'invention est à la fois simple et rapide à mettre en œuvre.

En outre, et surtout, l'étape b) au cours de laquelle on effectue un balayage de l'intégralité d'une surface S2 de la couche de poudre déposée, cette étape b) étant mise en **œuvre** avant les étapes c) et d) de fusion-solidification, va permettre la mise en place, entre les grains de poudres, de micro-connexions, sans toutefois que les grains de poudre ne fusionnent.

Ces micro-connexions, présentant avantageusement des dimensions de l'ordre du micromètre, par exemple de quelques micromètres et de préférence entre 1 et 3 µm, confèrent à la poudre une consistance particulière dans laquelle les grains de ladite poudre ne sont pas libres sans pour autant être totalement fusionnés.

Cette structure, ou consistance, des poudres obtenue suite à la mise en œuvre de l'étape b), et pour chacune des couches de poudre, en combinaison avec l'obtention, par fusion-solidification, de l'enveloppe extérieure et du maillage interne, permet, lors de l'étape finale de compression isostatique à chaud, un compactage homogène et maîtrisé de l'objet qui présente, au final, des caractéristiques exceptionnelles.

Ainsi, dans le procédé de l'invention, on réalise une étape de compression isostatique à chaud sur un objet tridimensionnel, ou une pièce, dans lequel ou laquelle, à l'intérieur de l'enveloppe externe, et à l'exclusion de celle-ci, plus de 90% du volume de la poudre n'a pas subi de fusion et une certaine proportion de vide, de l'ordre de 20 à 30%, entre les grains subsiste.

L'étape de CIC va permettre de supprimer ce vide entre les grains non fusionnés, mais entre lesquels des micro-connexions ont été préalablement établies.

La proportion résiduelle de vide avant la CIC, en combinaison avec la présence d'un maillage interne tridimensionnel au niveau duquel les grains de poudres ont subi une fusion, vont permettre, au moment de la mise en œuvre de la CIC, une déformation homogène régulière de l'objet tridimensionnel qui va conférer, à cet objet, une structure interne isotrope, fine et homogène, aboutissant notamment à des caractéristiques mécaniques optimales.

Au contraire, dans les procédés de l'état de la technique, lorsqu'on applique une CIC sur un matériau dont les grains de poudres ont déjà été fusionnés quasiment intégralement, le retrait dimensionnel est très souvent irrégulier et la pièce finale est susceptible de présenter un aspect déformé. Par exemple, au lieu d'obtenir une pièce de section circulaire souhaitée, ce à quoi on aboutit par la mise en œuvre de l'invention, on obtiendra généralement une pièce déformée non circulaire dite « patatoïde ».

D'autres caractéristiques et avantages de l'invention ressortiront de la description détaillée qui va suivre des modes de réalisation non limitatifs de l'invention, en référence aux figures annexées dans lesquelles :

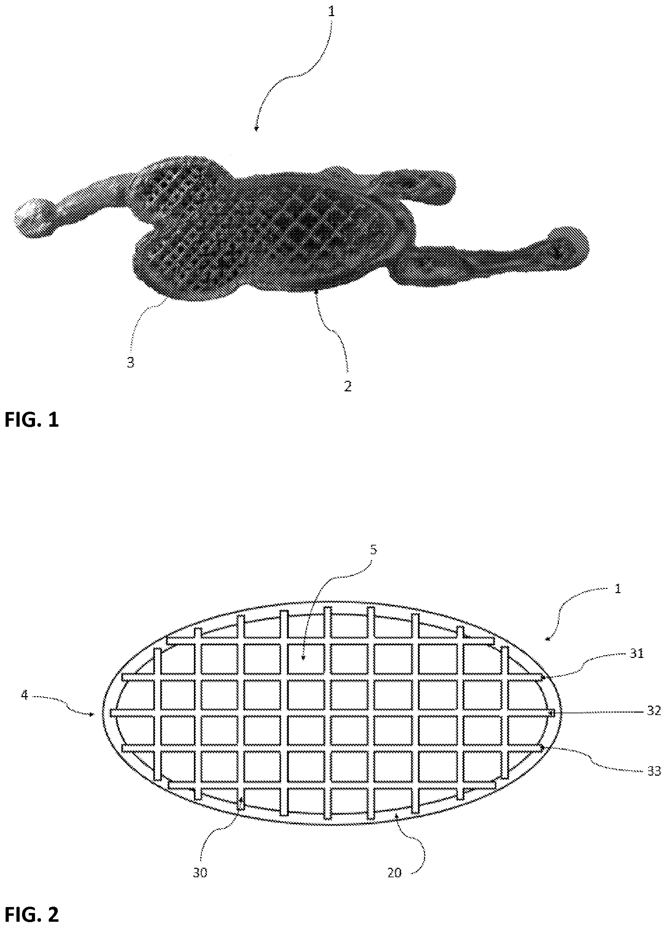

- la figure 1 représente une vue de dessus d'une coupe longitudinale d'un objet tridimensionnel, en l'occurrence une figurine représentant un cheval, obtenue par la mise en œuvre des étapes du procédé selon l'invention, et illustrant la peau extérieure et le maillage interne tridimensionnel de l'objet ;
- la figure 2 représente, de manière schématique, une vue de dessus d'une des couches de l'objet tridimensionnel obtenu par la mise en œuvre des étapes du procédé selon l'invention ; sur cette figure, il est plus particulièrement visible que le maillage tridimensionnel de la couche pénètre dans une partie de la largeur de la peau extérieure de ladite couche.

Telle que représentée sur les figures 1 et 2, la présente invention concerne un procédé de fabrication d'un objet tridimensionnel 1.

Un procédé de fabrication selon l'invention consiste, plus précisément, en la formation d'un objet tridimensionnel 1 par une superposition d'une pluralité de fines couches 4 de poudre(s), généralement métallique(s), la poudre pouvant être mise en fusion, à certains endroits de la couche 4, au moyen d'une source ou d'un faisceau d'énergie.

En ce qui concerne la poudre utilisée dans le procédé de l'invention, il s'agit généralement d'une poudre métallique, comportant un seul métal ou un mélange, ou alliage, de plusieurs métaux.

Toutefois, un tel mode de réalisation ne doit pas être considéré comme étant limitatif, et la poudre mise en **œuvre** dans le procédé de l'invention peut également consister, par exemple, en une poudre céramique.

Dans un mode de réalisation particulier, on utilise, lors de la mise en œuvre des différentes étapes du présent procédé, une poudre « dopée », c'est-à-dire dans laquelle les grains, de préférence métalliques, sont associés à des nanoparticules.

En ce qui concerne la taille des particules de poudre, celle-ci varie, de manière préférentielle, entre 5 et 500 pm.

Cela permet, de manière intéressante, d'accroître les propriétés mécaniques de l'objet tridimensionnel 1 obtenu finalement au moyen du procédé de l'invention. En particulier, ledit objet 1 présente une meilleure stabilité dimensionnelle à haute température et une résistance améliorée aux éventuelles étapes d'usinage. En outre, on peut obtenir, par ce moyen, un matériau fonctionnalisé.

Pour en revenir à présent à l'objet tridimensionnel 1, en référence à la figure 1, la structure de celui-ci comporte, d'une part, une peau extérieure 2 et, d'autre part, un maillage tridimensionnel interne 3.

Plus précisément, en référence à présent à la figure 2, ledit objet tridimensionnel 1 est formé d'une pluralité de couches 4 de poudre, et chacune de ces couches 4 comporte une bordure externe 20, ou bordure périphérique 20, qui enferme une partie centrale 5, cette dernière comprenant un maillage interne 30.

On comprend ainsi que la superposition des bordures externes 20 des couches 4 de poudre forme, au final, la peau extérieure 2 de l'objet tridimensionnel 1.

Pour ce qui est de la superposition du maillage interne 30 des couches 4, celle-ci permet d'obtenir le maillage tridimensionnel interne 3 de l'objet 1 en question.

Pour ce faire, dans une première étape a) du procédé de l'invention, une première couche 4 de poudre métallique, de surface totale S1, est déposée, de préférence sur une surface sensiblement plane, telle qu'un plateau de travail.

Au cours de cette première étape a), le dépôt de la couche 4 de poudre peut être effectué par tout moyen adapté à cet effet et connu de l'homme du métier, notamment par l'intermédiaire de moyens de distribution et d'étalement de la poudre.

La couche de poudre 4 déposée présente généralement une épaisseur de l'ordre de quelques dizaines de µm. Par exemple, mais non limitativement, l'épaisseur de ladite couche 4 est d'environ 50 µmn, sans toutefois dépasser 200 pm.

Suivant l'application de la première couche 4 de poudre, notamment de poudre métallique au cours de l'étape a), on effectue, au moyen d'un faisceau d'énergie, un balayage intégral d'une surface S2 contenue à l'intérieur de la surface S1 de la couche de poudre 4 qui a été étalée.

La surface S2 qui est balayée intégralement lors de cette étape b) dépend de la forme de l'objet tridimensionnel 1 que l'on souhaite obtenir au final.

Ainsi, par exemple, la couche de poudre 4 qui est déposée peut présenter une surface S1 de forme rectangulaire tandis que l'on balaye, au cours de l'étape b), une surface S2 circulaire contenue dans S1.

Il est également envisageable que toute la surface S1 qui a été étalée lors de l'étape a) soit balayée au moyen du faisceau d'énergie. Dans ce cas-là, S1 est égale à S2.

Le faisceau d'énergie consiste préférentiellement en un faisceau d'électrons.

La demanderesse a déterminé que, de manière particulièrement avantageuse et originale, la mise en œuvre de cette étape de balayage à ce moment-là du procédé, suivant l'étape de dépose a) et précédant les étapes de fusion-solidification c) et d), entraine la formation de micro-connexions entre les grains de la poudre, sans qu'il n'y ait de fusion.

L'élévation de température par l'application du faisceau d'électrons favorise une diffusion de grains de poudre permettant des microsoudures entre ces derniers, dont la taille est de l'ordre du micromètre, sans aller jusqu'à la fusion des grains.

On obtient ainsi une structure originale dans laquelle les grains sont micro-connectés ou micro-soudés entre eux.

Par conséquent, les grains de poudre ne sont plus libres dans le sens où ils ne peuvent plus s'écouler librement, tout en conservant une proportion de vide, au niveau des interstices entre les grains de poudres.

La proportion de vide varie préférentiellement de 20 à 40%, cette proportion correspondant à la surface de vide par rapport à la surface S2 balayée, pour chaque couche 4 de poudre, ou au volume de vide par rapport au volume total de l'objet tridimensionnel 1 obtenu après mise en application des étapes a) à e) .

Suivant l'étape b) de balayage intégral d'une surface S2 au moyen d'un faisceau d'électrons, on procède ensuite à une première étape c) de fusion-solidification au moyen d'une source d'énergie.

Dans un mode de réalisation préférentiel, la source d'énergie utilisée lors de la mise en œuvre du présent procédé, et notamment lors de cette étape c), est un faisceau d'électrons grâce auquel les particules de poudre sont bombardées d'électrons lancés à vitesse élevée, et dont l'énergie cinétique permet, au moment de l'impact avec les particules, une génération de chaleur. Cette chaleur est suffisante pour provoquer une fusion desdites particules de poudre, puis une solidification de celles-ci lors du refroidissement.

Les différentes étapes du procédé de l'invention sont avantageusement mises en œuvre sous vide, par exemple dans une enceinte étanche mise et maintenue sous vide au moyen d'une pompe à vide.

Cela permet notamment, avantageusement, d'éviter la génération de gaz entre les particules de poudre et devant être nécessairement évacuées par la suite. Par ce moyen, on prévient également les phénomènes d'oxydation, tout en permettant un bon fonctionnement du faisceau d'électrons.

Au cours de cette première étape c) de fusion-solidification, on peut effectuer, indifféremment, la fusion soit de la bordure externe 20 de la couche 4 de poudre, soit la fusion du maillage interne 30, tenant compte du fait que, de manière particulièrement intéressante, au moins une partie des mailles, par exemple 31, 32, 33, dudit maillage interne 30 pénètre dans une partie de la largeur de ladite bordure externe 20.

De préférence, et comme représenté sur la figure 2 jointe, toutes les mailles du maillage interne pénètrent dans une partie de la largeur de ladite bordure externe 20.

Suite à la fusion de la poudre au niveau de la bordure externe 20, au moyen de la source d'énergie, la solidification des particules de poudre, par soudage entre elles, a lieu directement après l'arrêt de ladite source d'énergie.

Une seconde étape de fusion-solidification d) est alors mise en œuvre, de préférence également au moyen d'un faisceau d'électrons constituant la source d'énergie.

Au cours de cette étape d), l'élément qui n'a pas été soumis à la source d'énergie lors de l'étape précédente c), soit la bordure externe 20, soit le maillage interne 30, subit une fusion à son tour.

Ainsi, plus spécifiquement, si la première étape c) de fusion-solidification a permis de fusionner la couche 4 de poudre au niveau de sa bordure extérieure 20, la seconde étape d) de fusion-solidification permet la réalisation de la fusion du maillage interne 30, les mailles 31, 32, 33 de celui-ci empiétant, en partie au moins, sur ladite bordure externe 20.

Dans le cas contraire, où la première étape c) de fusion-solidification a permis une fusion de la poudre du maillage interne 30, la seconde fusion-solidification lors de l'étape d) doit permettre un soudage de la poudre au niveau de la bordure périphérique 20 de la couche 4.

Etant donné que le maillage interne 30 pénètre en partie dans la bordure périphérique 20 de la couche de poudre 4, les particules de poudre, à ce niveau, subissent les deux étapes de fusion-solidification.

Aussi, comme cette double fusion-solidification est effectuée pour chacune des couches 4, on obtient, au niveau de l'objet tridimensionnel 1 final, un maillage tridimensionnel interne 3 qui pénètre dans au moins une partie de l'épaisseur de la peau extérieure 2.

Cette « double-fusion » de la matière, à l'endroit où le maillage interne 30 pénètre en partie dans la bordure 20, favorise un échange thermique entre la bordure extérieure 20 et la partie centrale 5 entre les mailles du maillage interne 30 et vers l'extérieur de l'objet 1.

En conséquence, le fait que le maillage interne 30 pénètre la bordure extérieure 20 permet une évacuation particulièrement efficace de la chaleur qui est émise par la source d'énergie lors du traitement de chacune des couches 4 aboutissant à la fabrication de l'objet 1.

Cela permet d'éviter, par exemple, une explosion des pièces lors de leur production par fabrication additive, sous l'effet de la chaleur dégagée par la source d'énergie lors des opérations de fusion.

En outre, une fois l'objet tridimensionnel 1 obtenu par superposition des couches 4, cette interpénétration du maillage tridimensionnel interne 30 dans la bordure extérieure 20 entrainera, lors de la mise en œuvre de l'étape ultime du procédé, qui consiste en une CIC (étape f), une déformation régulière de l'objet tridimensionnel 1 finalement obtenu.

Les étapes de dépose de poudre a), de balayage intégral b) et de fusion-solidification c) et d) sont répétées autant de fois que nécessaire pour obtenir l'objet tridimensionnel 1 souhaité.

De manière particulièrement avantageuse, l'intégralité de la première couche de poudre 4 est fusionnée, de même que l'intégralité de la dernière couche de poudre, de manière à obtenir un objet tridimensionnel 1 sous la forme d'une coque comportant une peau extérieure 2 et un maillage tridimensionnel interne 3, entre lesquels les particules de poudres non fusionnées mais micro-connectées sont maintenues avant l'étape finale de compression isostatique à chaud.

En ce qui concerne à présent le maillage tridimensionnel interne 3 dudit objet tridimensionnel 1, une fois celui-ci fini, il s'agit avantageusement d'un maillage croisé dessinant des volumes, et plus avantageusement encore des formes dodécaédriques, qui améliorent d'autant plus l'évacuation de la chaleur vers l'extérieur des mailles ou de l'objet 1.

Toutefois, un tel mode de réalisation ne doit pas être considéré comme étant limitatif de l'invention, et le maillage tridimensionnel 3 de l'objet 1 fini peut également présenter des mailles dessinant une pluralité de formes cubiques, par exemple, comme représenté sur la figure 2 jointe, ou encore pyramidales, ou toute autre figure géométrique homogène ou à gradient dimensionnel. Cela signifie que les mailles du maillage 3 proches de la peau extérieure 2 peuvent éventuellement présenter une section plus faible que celle des mailles du maillage 3 internes à la partie centrale.

De manière toute préférentielle, dans le procédé de l'invention on met en œuvre un chemin de fusion différent, défini au moyen de données numériques, pour chacune des couches 4 lors des étapes c) ou d), afin d'obtenir un maillage tridimensionnel croisé, dessinant des volumes.

En ce qui concerne à présent les dimensions des différents éléments de l'objet, il est, par exemple, avantageux que la largeur, en section, des mailles du maillage tridimensionnel interne 3 de l'objet 1, soit comprise entre 0,50 et 3,50 mm.

En effet, il a été déterminé que cette largeur favorise une évacuation particulièrement efficace de l'énergie émise par le faisceau d'électrons notamment.

Les mailles, par exemple 31, 32 et 33 du maillage interne 30 de chaque couche 4 pénètrent avantageusement préférentiellement dans la largeur de la bordure externe 20 de quelques dixièmes de millimètres, par exemple entre 0,1 et 0,9 mm, selon la largeur de ladite bordure 20, qui est comprise préférentiellement, quant à elle, entre 1,0 et 5,0 mm.

Selon une particularité du procédé, déjà évoquée précédemment, par la mise en œuvre de l'étape b), entre lesdites mailles, par exemple 31, 32, 33, du maillage interne 30, les grains ou particules de poudre ne subissent aucune fusion mais sont micro-soudés entre eux au moyen de micro-connexions. Par conséquent, l'objet tridimensionnel 1 incorpore également, en son sein, des particules de poudre non fusionnées et du vide entre ces particules.

De manière plus précise, plus de 90% et, plus préférentiellement, plus de 95% de la masse finale, à l'exclusion de la peau extérieure 2, de l'objet tridimensionnel 1, obtenu par la mise en œuvre du procédé de l'invention est constituée de grains de poudres non fusionnés.

On peut ainsi avantageusement utiliser des éléments dopants ajoutés à la poudre métallique, comme des nanoparticules, qui seraient susceptibles de se vaporiser ou de s'agréger lors d'une mise en dissolution classiquement mise en œuvre.

En outre, le fait de maintenir les particules de poudre non fusionnées en place, entre les mailles 31, 32, 33 du maillage 30, tout comme la présence du maillage 3, favorise notamment l'obtention d'un objet tridimensionnel 1 particulièrement compact et homogène après une étape ultérieure f) de compression isostatique à chaud (CIC).

Cela facilite également le transfert et l'évacuation de la chaleur générée au cours du procédé de fabrication additive selon l'invention.

En d'autres termes, la répétition des étapes notamment b), c) et d) de mise en place, d'une part, de micro-connexions entre les particules de poudre avec maintien d'interstices entre celles-ci et, d'autre part, d'un maillage tridimensionnel interne 3, celui-ci pénétrant en partie la peau externe 2 de l'objet 1, entraine, au moment de la CIC de l'étape f), un retrait dimensionnel homogène qui permet l'obtention d'une pièce finale

La technique de CIC constitue, plus particulièrement, un traitement thermique de l'objet tridimensionnel 1 obtenu suivant la mise en œuvre des étapes a) à e) décrites ci-dessus, et mettant en œuvre, notamment, une pression élevée pour améliorer les propriétés dudit objet.

Cette compression peut être obtenue, préférentiellement, par l'intermédiaire d'un gaz inerte, par exemple l'argon. L'application pendant un certain temps d'une température et d'une pression élevée permet d'obtenir une amélioration des caractéristiques de l'objet 1 final.

La présente invention est particulièrement intéressante et avantageuse pour la fabrication de pièces tridimensionnelles 1 de dimensions relativement larges, ayant plus particulièrement des dimensions de l'ordre du millimètre, jusqu'à plusieurs décimètres, en s'affranchissant de l'utilisation, souvent contraignante, de supports faisant fonction d'étais.

En outre, contrairement aux procédés mis en œuvre classiquement dans la métallurgie des poudres, le procédé de l'invention ne nécessite pas l'utilisation d'une enceinte métallique solide pour la CIC.

## Revendications

1. Procédé de fabrication d'un objet tridimensionnel (1) à partir d'un empilement de couches de poudre, ledit objet tridimensionnel (1) comprenant une peau extérieure (2) et un maillage tridimensionnel interne (3), ledit objet (1) étant formé d'une superposition de plusieurs couches (4) de poudre comportant, chacune, au moins une bordure externe (20) enfermant une partie centrale (5) comprenant un maillage interne (30) comprenant des mailles (31, 32, 33), la superposition des bordures externes (20) des couches (4) formant ladite peau extérieure (2) de l'objet (1) et la superposition des maillages internes (30) des couches (4) formant ledit maillage tridimensionnel interne (3) de l'objet (1), procédé dans lequel :
a) on dépose une couche (4) de poudre de surface totale S1 sur un plateau de travail ;
b) on effectue, au moyen d'un faisceau d'énergie, un balayage intégral d'une surface S2 contenue dans ladite surface totale S1, en fonction de l'objet tridimensionnel (1) à fabriquer, en sorte de former des micro-connexions entre les grains de poudre de ladite surface S2 ;
c) au cours d'une première étape de fusion-solidification, on effectue, au moyen dudit faisceau d'énergie, la fusion de la bordure externe (20) ou du maillage interne (30), ce dernier pénétrant dans une partie de la largeur de ladite bordure externe (20) ;
d) au cours d'une seconde étape de fusion-solidification, on effectue, au moyen dudit faisceau d'énergie, la fusion de l'élément choisi parmi la bordure externe (20) ou le maillage interne (30) qui n'a pas été solidifié au cours de ladite première étape de fusion-solidification, en sorte de fusionner deux fois la partie dudit maillage (30) pénétrant dans ladite bordure externe (20);
e) on répète n fois les étapes a) à d) en sorte de former n couches (4) de poudre métallique superposées et fabriquer ledit objet tridimensionnel (1), dans lequel entre lesdites mailles (31, 32, 33) du maillage interne (30), les grains ou particules de poudre ne subissent aucune fusion mais sont micro-soudés entre eux au moyen des micro-connexions ;
f) on effectue une compression isostatique à chaud de l'objet tridimensionnel (1).

2. Procédé de fabrication additive selon la revendication précédente dans lequel ledit faisceau d'énergie consiste en un faisceau d'électrons.

3. Procédé de fabrication additive selon l'une quelconque des revendications précédentes dans lequel l'ensemble des étapes du procédé est réalisé sous vide.

4. Procédé de fabrication additive selon l'une quelconque des revendications précédentes dans lequel le maillage tridimensionnel interne (3) présente une forme de dodécaèdre.

5. Procédé de fabrication additive selon l'une quelconque des revendications précédentes dans lequel la largeur des mailles du maillage interne (30) est comprise entre 0,50 et 3,50 mm.

6. Procédé de fabrication additive selon l'une quelconque des revendications précédentes dans lequel on fait pénétrer le maillage interne (30) dans la bordure externe (20) d'une couche (4) de 0,1 à 0,9 mm, ladite bordure externe (20) ayant une largeur comprise entre 1,0 et 5 mm.

7. Procédé de fabrication additive selon l'une quelconque des revendications précédentes, dans lequel l'intégralité d'une première couche de poudre (4) est fusionnée, de même que l'intégralité d'une dernière couche de poudre, de manière à obtenir l'objet tridimensionnel (1) sous la forme d'une coque comportant la peau extérieure (2) et le maillage tridimensionnel interne (3), entre lesquels les particules de poudres non fusionnées mais micro-connectées sont maintenues avant l'étape de compression isostatique à chaud.

8. Procédé de fabrication additive selon l'une quelconque des revendications précédentes, dans lequel, dans l'objet tridimensionnel, sur lequel l'étape de compression isostatique est réalisée, est tel que à l'intérieur de l'enveloppe externe, et à l'exclusion de celle-ci, plus de 90% du volume de la poudre n'a pas subi de fusion et une certaine proportion de vide entre les grains subsiste, l'étape de compression isostatique à chaud permettant de supprimer ce vide entre les grains non fusionnés, mais entre lesquels des micro-connexions ont été préalablement établies.

## Patentansprüche

1. Verfahren zur Fertigung eines dreidimensionalen Objekts (1) aus einem Stapel von Pulverschichten, wobei das dreidimensionale Objekt (1) eine Außenhaut (2) und ein dreidimensionales Innengitter (3) umfasst, wobei das Objekt (1) von einer Überlagerung mehrerer Pulverschichten (4) gebildet ist, die jeweils mindestens einen Außenrand (20) aufweisen, der einen Mittelabschnitt (5) einschließt, der ein Innengitter (30) umfasst, das Maschen (31, 32, 33) umfasst, wobei die Überlagerung der Außenränder (20) der Schichten (4) die Außenhaut (2) des Objekts (1) bildet und die Überlagerung der Innengitter (30) der Schichten (4) das dreidimensionale Innengitter (3) des Objekts (1) bildet, wobei in dem Verfahren:
a) eine Pulverschicht (4) einer Gesamtfläche S1 auf eine Arbeitsfläche aufgebracht wird;
b) mittels eines Energiebündels eine vollständige Abtastung einer Fläche S2 vorgenommen wird, die in der Gesamtfläche S1 enthalten ist, je nach dem zu fertigenden dreidimensionalen Objekt (1), so dass Mikroverbindungen zwischen den Pulverkörnern der Fläche S2 gebildet werden;
c) im Verlauf eines ersten Aufschmelz-Verfestigungsschritts mittels des Energiebündels das Aufschmelzen des Außenrands (20) oder des Innengitters (30) vorgenommen wird, wobei letzteres in einen Abschnitt der Breite des Außenrands (20) eindringt;
d) im Verlauf eines zweiten Aufschmelz-Verfestigungsschritts mittels des Energiebündels das Aufschmelzen des Elements vorgenommen wird, das aus dem Außenrand (20) oder dem Innengitter (30) gewählt ist, das im Verlauf des ersten Aufschmelz-Verfestigungsschritts nicht verfestigt wurde, um den Abschnitt des Gitters (30) zweimal aufzuschmelzen, der in den Außenrand (20) eindringt;
e) die Schritte a) bis d) n Mal wiederholt werden, um n überlagerte Metallpulverschichten (4) zu bilden und das dreidimensionale Objekt (1) zu fertigen, wobei zwischen den Maschen (31, 32, 33) des Innengitters (30) die Pulverkörner oder -teilchen kein Aufschmelzen erfahren, sondern mittels der Mikroverbindungen miteinander mikroverschweißt werden;
f) ein heißisostatisches Pressen des dreidimensionalen Objekts (1) vorgenommen wird.

2. Additives Fertigungsverfahren nach dem vorhergehenden Anspruch, wobei das Energiebündel aus einem Elektronenbündel besteht.

3. Additives Fertigungsverfahren nach einem der vorhergehenden Ansprüche, wobei alle Schritte des Verfahrens im Vakuum durchführt werden.

4. Additives Fertigungsverfahren nach einem der vorhergehenden Ansprüche, wobei das dreidimensionale Innengitter (3) eine Dodekaederform aufweist.

5. Additives Fertigungsverfahren nach einem der vorhergehenden Ansprüche, wobei die Breite der Maschen des Innengitters (30) zwischen 0,50 und 3,50 mm beträgt.

6. Additives Fertigungsverfahren nach einem der vorhergehenden Ansprüche, wobei man das Innengitter (30) 0,1 bis 0,9 mm in den Außenrand (20) einer Schicht (4) eindringen lässt, wobei der Außenrand (20) eine Breite zwischen 1,0 und 5 mm aufweist.

7. Additives Fertigungsverfahren nach einem der vorhergehenden Ansprüche, wobei die Gesamtheit einer ersten Pulverschicht (4) aufgeschmolzen wird, ebenso wie die Gesamtheit einer letzten Pulverschicht, um das dreidimensionale Objekt (1) in Form einer Schale zu erhalten, die die Außenhaut (2) und das dreidimensionale Innengitter (3) aufweist, zwischen denen die nicht aufgeschmolzenen aber mikroverbundenen Pulverteilchen vor dem Schritt des heißisostatischen Pressens gehalten werden.

8. Additives Fertigungsverfahren nach einem der vorhergehenden Ansprüche, wobei in dem dreidimensionalen Objekt, an dem der Schritt des isostatischen Pressens durchgeführt wird, so beschaffen ist, dass im Inneren der Außenhülle und unter Ausschluss dieser mehr als 90 % des Pulvervolumens kein Aufschmelzen erfahren hat und ein bestimmter Vakuumanteil zwischen den Körnern fortbesteht, wobei es der Schritt des heißisostatischen Pressens gestattet, dieses Vakuum zwischen den Körnern, die nicht aufgeschmolzen sind, zwischen denen jedoch zuvor Mikroverbindungen hergestellt worden sind, zu beseitigen.

## Claims

1. Method for manufacturing a three-dimensional object (1) from a stack of layers of powder, said three-dimensional object (1) comprising an outer skin (2) and an inner three-dimensional mesh (3), said object (1) being formed by a superpositioning of several layers (4) of powder, each comprising at least one outer border (20) enclosing a central part (5) comprising an inner mesh (30) comprising grid cells (31, 32, 33), the superpositioning of the outer borders (20) of the layers (4) forming said outer skin (2) of the object (1) and the superpositioning of the inner meshes (30) of the layers (4) forming said inner three-dimensional mesh (3) of the object (1), a method wherein:
a) a layer (4) of powder is deposited with a total surface area S1 on a working plate;
b) an energy beam is used to perform a full scan of a surface S2 contained within said total surface area S1, as a function of the three-dimensional object (1) to be manufactured, so as to form micro-connections between the grains of powder of said surface area S2;
c) during a first step of melting-solidification, said energy beam is used to perform the melting of the outer border (20) or of the inner mesh (30), the latter penetrating into a part of the width of said outer border (20);
d) during a second step of melting-solidification, said energy beam is used to perform the melting of the element chosen from among the outer border (20) or the inner mesh (30) which has not been solidified during said first step of melting-solidification, so as to melt the part of said mesh (30) penetrating into said outer border (20) twice;
e) the steps a) to d) are repeated n times so as to form n superposed layers (4) of metallic powder and manufacture said three-dimensional object (1), wherein, between said grid cells (31, 32, 33) of the inner mesh (30), the grains or particles of powder do not undergo any melting but are micro-welded with one another by means of the micro-connections;
f) a hot isostatic compression of the three-dimensional object (1) is performed.

2. Additive manufacturing method according to the preceding claim, wherein said energy beam consists of an electron beam.

3. Additive manufacturing method according to either one of the preceding claims, wherein all of the steps of the method are performed in a vacuum.

4. Additive manufacturing method according to any one of the preceding claims, wherein the inner three-dimensional mesh (3) has a dodecahedron form.

5. Additive manufacturing method according to any one of the preceding claims, wherein the width of the grid cells of the inner mesh (30) lies between 0.50 and 3.50 mm.

6. Additive manufacturing method according to any one of the preceding claims, wherein the inner mesh (30) in the outer border (20) is penetrated by a layer (4) of 0.1 to 0.9 mm, said outer border (20) having a width of between 1.0 and 5 mm.

7. Additive manufacturing method according to any one of the preceding claims, wherein all of a first layer of powder (4) is melted, as is all of a last layer of powder, so as to obtain the three-dimensional object (1) in the form of a shell comprising the outer skin (2) and the inner three-dimensional mesh (3), between which the particles of powders that are not melted but micro-connected are maintained before the hot isostatic compression step.

8. Additive manufacturing method according to any one of the preceding claims, wherein, in the three-dimensional object, on which the isostatic compression step is performed, is such that, inside the outer jacket, and to the exclusion thereof, more than 90% of the volume of the powder has not undergone melting and a certain proportion of void between the grains subsists, the hot isostatic compression step making it possible to eliminate this void between the grains that have not melted, but between which the micro-connections have been previously established.
